# EUROPÄISCHE PATENTSCHRIFT

(11) **EP 2 788 447 B1**
(45) Veröffentlichungstag und Bekanntmachung des Hinweises auf die Patenterteilung: **16.09.2015**
(21) Anmeldenummer: 12795406.3
(22) Anmeldetag: 28.11.2012
(51) Int. Cl.: C09J 175/06, C08G 18/40, C08G 18/44, C08G 18/48, C08G 18/66, C08G 18/42

(54) **VERWENDUNG VON WÄSSRIGEN POLYURETHANDISPERSIONEN ZUR VERBUNDFOLIENKASCHIERUNG**
USE OF AQUEOUS POLYURETHANE DISPERSIONS FOR COMPOSITE FILM LAMINATION
UTILISATION DE DISPERSIONS AQUEUSES DE POLYURÉTHANE POUR LE CONTRECOLLAGE DE FILMS COMPOSITES

(30) Priorität: 09.12.2011 EP 11192719
(43) Veröffentlichungstag der Anmeldung: 15.10.2014
(73) Patentinhaber: BASF SE, 67056 Ludwigshafen (DE)
(72) Erfinder: MEYER, Axel, 69115 Heidelberg (DE); SCHUMACHER, Karl-Heinz, 67433 Neustadt (DE); KIENER, Christoph, 67256 Weisenheim am Sand (DE)
(86) Internationale Anmeldenummer: PCT/EP2012/073818
(87) Internationale Veröffentlichungsnummer: WO 2013/083456

(56) Entgegenhaltungen:
- US-A- 5 532 058
- US-B1- 6 235 384
- DATABASE WPI Week 200505 Thomson Scientific, London, GB; AN 2005-042909 XP002691769, & JP 2004 352905 A (DAIICHI KOGYO SEIYAKU CO LTD) 16. Dezember 2004 (2004-12-16)

## Beschreibung

Die Erfindung betrifft die Verwendung von wässrigen Polyurethandispersionen zur Verbundfolienkaschierung, wobei das Polyurethan aus amorphen Polyesterpolyolen aufgebaut ist. Die Erfindung betrifft auch ein Verfahren zur Herstellung der Verbundfolien sowie die nach dem Verfahren hergestellten Verbundfolien.

Durch die Verklebung bzw. Kaschierung von zwei oder mehr Folien aus unterschiedlichen Werkstoffen werden Eigenschaften dieser Werkstoffe kombiniert. So bestehen flexible Verpackungen häufig aus Verbundfolien, welche mit einem geeigneten Klebstoff miteinander verklebt sind, wobei mindestens eine der miteinander verbundenen Folien eine Polymerfolie ist. Zur Verklebung der Folien miteinander werden üblicherweise sogenannte Kaschierkleber eingesetzt. Hierbei handelt es sich z.B. um in organischen Lösungsmitteln gelöste Bindemittelsysteme, welche durch Reaktion von Polyisocyanatverbindungen mit Hydroxygruppen tragenden Polyestern oder Polyethern oder unter Einwirkung von Wasser auf Polyisocyanatverbindungen vernetzen. Die Verwendung derartiger organischer Lösungen als Kaschierkleber ist jedoch technisch aufwändig, da wegen der Feuergefährlichkeit dieser Lösungsmittel explosionsgeschützte Beschichtungsanlagen eingesetzt werden müssen. Ferner besteht die Gefahr, dass Restlösungsmittel in den Verbundlaminaten die einzupackenden Füllgüter durch Geschmacks- und Geruchsbelästigung beeinträchtigen.

Zum Stand der Technik zu Klebstoffen für die Verbundfolienkaschierung gehören auch wässrige Polyurethandispersionen, wie sie beispielsweise in EP 0615988, DE 102005006235 oder EP 0884336 beschrieben werden. Die in diesen Dispersionen enthaltenen Polyurethane sind in der Regel gebildet aus Polyetherdiolen, d.h. zweiwertigen Polyetheralkoholen wie sie z.B. durch Polymerisation von Ethylenoxid, Propylenoxid oder Butylenoxid erhalten werden. Um eine höhere Festigkeit des Folienverbundes zu erreichen, können diese Systeme in Kombination mit einem Vernetzer eingesetzt werden. Bei solchen 2-Komponentensystemen wird der Vernetzer kurz vor der Anwendung zugemischt und sorgt für eine höhere Festigkeit des Folienverbundes. Trotz Verwendung von Vernetzern sind die bisher bekannten wässrigen Systeme im Vergleich zu Systemen auf Basis von organischen Lösungen nicht hinreichend für eine Verwendung zur Herstellung von Verbundfolien, die besonders hohen Belastungen ausgesetzt werden. Stark belastbare Folienverbunde werden insbesondere für sogenannte retort-Anwendungen bei der Verpackung von Lebensmitteln benötigt. Hierbei wird der gesamte Folienverbund mit dem darin verpackten Inhalt einem Autoklavierprozess unterzogen, um die in der Folienverpackung enthaltenen Lebensmittel zu sterilisieren oder zu garen. Dabei wird der Folienverbund starken thermischen und chemischen Belastungen ausgesetzt Typische Bedingungen sind Erwärmen auf 120 °C für 45 Minuten oder Erwärmen auf 130 °C für 30 Minuten. Typischerweise bestehen dafür verwendete Verbundfolien aus Kombinationen folgender Folienmaterialien: Aluminiumfolie, bedruckte Polyesterfolie, unbedruckte Polyesterfolie, bedruckte Polyamidfolie, unbedruckte Polyamidfolie, Polypropylenfolie. Insbesondere der Verbund aus Aluminiumfolie und Polyesterfolie ist technisch herausfordernd, da eine gute Haftung zur Metallfolie unter diesen Bedingungen schwierig zu erreichen ist. Eine weitere Anwendung, bei der Folienverbunde stark belastet werden, ist das sogenannte "hot-filling". Dabei werden aus Verbundfolien bestehende Verpackungen bei Temperaturen von 85 bis 90 °C mit einem heißen Lebensmittel befüllt. Bisherige Kaschierklebstoffe aus Basis von wässrigen Polyurethandispersionen waren für derartige Anwendungen noch nicht in vollem Maße zufriedenstellend.

US 5 532 058 A offenbart wässrige Polyurethandispersionen auf Basis von Polyesterdiol, hergestellt aus Adipinsäure, Isophthalsäure und Hexandiol, Dimethylolpropansäure und Tetramethylxylylendiisocyanat, welche zur Verklebung von flexiblen Folien aus Metall oder Kunststoffen für sterilisierbare Verbundfolien-Verpackungen eingesetzt werden, wobei als externe Vernetzer Aziridin-, Carbodiimid- und Epoxyverbindungen offenbart werden.

Die Aufgabe bestand darin, von organischen Lösungsmitteln freie, wässrige Klebstoffe zu entwickeln, welche als Kaschierklebstoffe zur Herstellung von hoch belastbaren Verbundfolien, insbesondere für retort-Anwendungen und für hot-filling Anwendungen eingesetzt werden können.

Es wurde gefunden, dass die Aufgabe gelöst werden kann durch Verwendung der nachstehend beschriebenen Polyurethanklebstoffdispersionen. Gegenstand der Erfindung ist die Verwendung von wässrigen Polyurethandispersionen zur Verbundfolienkaschierung, wobei das Polyurethan zu mindestens 10 Gew.-% aufgebaut ist aus mindestens einem amorphen Polyesterpolyol, wobei die Polyurethandispersion mindestens einen externen Vernetzer enthält und es sich bei dem externen Vernetzer um ein Polyisocyanat mit mindestens zwei Isocyanatgruppen handelt.

Gegenstand der Erfindung ist auch ein Verfahren zur Herstellung von Verbundfolien, wobei man eine nachstehend näher beschriebene wässrige Polyurethandispersion zur Verfügung stellt, die Polyurethandispersion auf eine Kunststoff- oder Metallfolie aufträgt und mit einer oder mehreren weiteren Kunststoff- und/oder Metallfolien zu einer Verbundfolie verklebt. Gegenstand der Erfindung sind auch Verbundfolien, hergestellt nach dem erfindungsgemäßen Verfahren.

Der erfindungsgemäß zu verwendende Klebstoff besteht im Wesentlichen aus mindestens einem in Wasser dispergiertem Polyurethan als polymeres Bindemittel und optional Zusatzstoffen wie Füllstoffen, Verdicker, Entschäumer etc. Das polymere Bindemittel liegt vorzugsweise als Dispersion in Wasser oder auch in einem Gemisch aus Wasser und wasserlöslichen organischen Lösungsmitteln mit Siedepunkten von vorzugsweise unter 150°C (1 bar) vor. Besonders bevorzugt ist Wasser als einziges Lösungsmittel. Bei Gewichtsangaben zur Zusammensetzung des Klebstoffs wird das Wasser oder sonstige Lösemittel nicht mitberechnet.

Amorph sind Feststoffe, deren Bausteine nicht in Kristallgittern angeordnet sind, d.h. nicht kristallin sind. Amorphe Polyester sind erfindungsgemäß insbesondere solche Polyester, welche im Temperaturbereich von -30°C bis +60°C keinen Schmelzpunkt aufweisen.

Bevorzugt enthält das Polyurethan amorphe Polyesterdiole in einer Menge von mehr als 10 Gew.-% oder mehr als 25 Gew.%, besonders bevorzugt mindestens 35 Gew.%, bezogen auf das Polyurethan.

Insgesamt ist das Polyurethan vorzugsweise aufgebaut aus:
a) mindestens einem amorphen Polyesterdiol mit einem Molekulargewicht über 500 bis 4000 g/mol,
b) mindestens einem von dem amorphen Polyesterdiol a) verschiedenen, weiteren Makrodiol mit einem Molekulargewicht über 500 bis 4000 g/mol,
c) mindestens einem organischen Diisocyanat oder einem eine arithmetische mittlere NCO-Funktionalität von 1,9 bis 2,3 aufweisenden Gemisch aus organischen Isocyanatverbindungen, vorzugsweise Toluol-2,4-diisocyanat,
d) mindestens einer Verbindung ausgewählt aus der Gruppe bestehend aus ein- bis dreiwertigen Alkoholen, welche zusätzlich mindestens eine ionische Gruppe oder mindestens eine in eine ionische Gruppe überführbare Gruppe enthalten, Diaminocarbonsäuren und Diaminosulfonsäuren,
e) optional mindestens einem zweiwertigen Alkohol eines mittleren Molekulargewichts von 62 bis 500 g/mol und
f) optional weiteren, von den Monomeren (a) bis (e) verschiedenen mehrwertigen Verbindungen mit reaktiven Gruppen, bei denen es sich um alkoholische Hydroxylgruppen, primäre oder sekundäre Aminogruppen oder Isocyanatgruppen handelt und
g) optional von den Monomeren (a) bis (f) verschiedenen, einwertigen Verbindungen mit einer reaktiven Gruppe, bei der es sich um eine alkoholische Hydroxylgruppe, eine primäre oder sekundäre Aminogruppe oder eine Isocyanatgruppe handelt,
h) mindestens einem organischen oder anorganischen Neutralisationsmittlel, vorzugsweise Ammoniak.

Insgesamt ist das Polyurethan vorzugsweise aufgebaut aus:
a) 10 bis 80 Gew.% an mindestens einem amorphen Polyesterdiol mit einem Molekulargewicht über 500 bis 4000 g/mol,
b) 10 bis 80 Gew.% an mindestens einem von dem amorphen Polyesterdiol a) verschiedenen, weiteren Makrodiol mit einem Molekulargewicht über 500 bis 4000 g/mol,
c) 5 bis 30 Gew.% an mindestens einem organischen Diisocyanat oder einem eine arithmetische mittlere NCO-Funktionalität von 1,9 bis 2,3 aufweisenden Gemisch aus organischen Isocyanatverbindungen, vorzugsweise Toluol-2,4-diisocyanat,
d) 2 bis 10 Gew.% an mindestens einer Verbindung, ausgewählt aus ein- bis dreiwertigen Alkoholen, welche zusätzlich mindestens eine ionische Gruppe oder mindestens eine in eine ionische Gruppe überführbare Gruppe enthält und Diaminocarbonsäuren,
e) 0 bis 5 Gew.% an mindestens einem zweiwertigen Alkohol eines mittleren Molekulargewichts von 62 bis 500 g/mol und
f) 0 bis 5 Gew.% weiteren, von den Monomeren (a) bis (e) verschiedenen mehrwertigen Verbindungen mit reaktiven Gruppen, bei denen es sich um alkoholische Hydroxylgruppen, primäre oder sekundäre Aminogruppen oder Isocyanatgruppen handelt und
g) 0 bis 5 Gew.% von den Monomeren (a) bis (f) verschiedenen, einwertigen Verbindungen mit einer reaktiven Gruppe, bei der es sich um eine alkoholische Hydroxylgruppe, eine primäre oder sekundäre Aminogruppe oder eine Isocyanatgruppe handelt,
h) mindestens einem organischen oder anorganischen Neutralisationsmittlel in einer Menge, sodass mindestens 20% von Verbindungen d) ionogen, d.h. neutralisiert vorliegen.

Im Hinblick auf gute Filmbildung und Elastizität kommen als Diole (a) und (b) vornehmlich höhermolekulare Diole in Betracht, die ein Molekulargewicht von über 500 bis 4000, vorzugsweise von etwa 1000 bis 3000 g/mol haben. Es handelt sich hierbei um das zahlenmittlere Molgewicht Mn. Mn ergibt sich durch Bestimmung der Anzahl der Endgruppen (OH-Zahl). Bevorzugt werden amorphe Polyesterdiole eingesetzt, die durch Umsetzung von zweiwertigen Alkoholen mit zweiwertigen Carbonsäuren erhalten werden. Anstelle der freien Polycarbonsäuren können auch die entsprechenden Polycarbonsäureanhydride oder entsprechende Polycarbonsäureester von niederen Alkoholen oder deren Gemische zur Herstellung der Polyesterpolyole verwendet werden.

Vorzugsweise ist zur Herstellung des amorphen Polyesterdiols a) mindestens eine Polycarbonsäure eine aromatische Dicarbonsäure, insbesondere Isophtalsäure. In einer bevorzugten Ausführungsform wird zur Herstellung des amorphen Polyesterdiols a) ein Gemisch von Carbonsäuren verwendet bestehend aus mindestens einer aliphatischen Dicarbonsäure mit 3 bis 10, vorzugsweise 4 bis 8 C-Atomen und mindestens einer aromatischen Dicarbonsäure. Das Mischungsverhältnis ist vorzugsweise von 0,5:1 bis 2:1. Ein bevorzugtes Dicarbonsäuregemisch ist Adipinsäure/Isophthalsäure, insbesondere im Verhältnis von 0,5:1 bis 2:1.

Zur Herstellung der Polyesterdiole a) und b) kommen als mehrwertige Alkohole z.B. Ethylenglykol, Propan-1,2-diol, Propan-1,3-diol, Butan-1,3-diol, Buten-1,4-diol, Butin-1,4-diol, Pentan-1,5-diol, Neopentylglykol, Bis-(hydroxymethyl)-cyclohexane wie 1,4-Bis-(hydroxymethyl)cyclohexan, 2-Methyl-propan-1,3-diol, Methylpentandiole, ferner Diethylenglykol, Triethylenglykol, Tetraethylenglykol, Polyethylenglykol, Dipropylenglykol, Polypropylenglykol, Dibutylenglykol und Polybutylenglykole in Betracht. Bevorzugt sind Alkohole der allgemeinen Formel HO-(CH₂)ₓ-OH, wobei x eine Zahl von 1 bis 20, bevorzugt eine gerade Zahl von 2 bis 20 ist. Beispiele hierfür sind Ethylenglycol, Butan-1,4-diol, Hexan-1,6-diol, Octan-1,8-diol und Dodecan-1,12-diol. Weiterhin bevorzugt ist Neopentylglykol.

Zur Herstellung der amorphen Polyesterdiole a) werden vorzugsweise mindestens ein Alkandiol mit 2 bis 10, vorzugsweise 4 bis 8 C-Atomen eingesetzt.

Zusätzlich zu den amorphen Polyesterdiolen a) können als Makrodiole b) auch nicht-amorphe, d.h. kristalline oder teilkristalline Polyesterpolyole als eingesetzt werden, welche aus Polycarbonsäuren und mehrwertigen Alkoholen herstellbar sind. Als mehrwertige Alkohole kommen die oben genannten in Frage. Die Polycarbonsäuren können aliphatisch, cycloaliphatisch, araliphatisch, aromatisch oder heterocyclisch sein und gegebenenfalls, z.B. durch Halogenatome, substituiert und/oder ungesättigt sein. Als Beispiele hierfür seien genannt: Korksäure, Azelainsäure, Phthalsäure, Isophthalsäure, Phthalsäureanhydrid, Tetrahydrophthalsäureanhydrid, Hexahydrophthalsäureanhydrid, Tetrachlorphthalsäureanhydrid, Endomethylentetrahydrophthalsäureanhydrid, Glutarsäureanhydrid, Maleinsäure, Maleinsäureanhydrid, Fumarsäure, dimere Fettsäuren. Bevorzugt sind Dicarbonsäuren der allgemeinen Formel HOOC- (CH₂)_{y}-COOH, wobei y eine Zahl von 1 bis 20, bevorzugt eine gerade Zahl von 2 bis 20 ist, z.B. Bernsteinsäure, Adipinsäure, Sebacinsäure und Dodecandicarbonsäure.

Als Makrodiole b) kommen auch Polycarbonatdiole, wie sie z.B. durch Umsetzung von Phosgen mit einem Überschuss von den als Aufbaukomponenten für die Polyesterpolyole genannten niedermolekularen Alkohole erhalten werden können, in Betracht.

Es können als Makrodiole b) auch Polyesterdiole auf Lacton-Basis verwendet werden, wobei es sich um Homo- oder Mischpolymerisate von Lactonen, bevorzugt um endständige Hydroxylgruppen aufweisende Anlagerungsprodukte von Lactonen an geeignete difunktionelle Startermoleküle handelt. Als Lactone kommen bevorzugt solche in Betracht, die sich von Verbindungen der allgemeinen Formel HO-(CH₂)_{z}-COOH ableiten, wobei z eine Zahl von 1 bis 20 ist und ein H-Atom einer Methyleneinheit auch durch einen C₁- bis C₄-Alkylrest substituiert sein kann. Beispiele sind epsilon-Caprolacton, β-Propiolacton, gamma-Butyrolacton und/oder Methyl-epsilon-caprolacton sowie deren Gemische. Geeignete Starterkomponenten sind z.B. die vorstehend als Aufbaukomponente für die Polyesterpolyole genannten niedermolekularen zweiwertigen Alkohole. Die entsprechenden Polymerisate des epsilon-Caprolactons sind besonders bevorzugt. Auch niedere Polyesterdiole oder Polyetherdiole können als Starter zur Herstellung der Lacton-Polymerisate eingesetzt sein. Anstelle der Polymerisate von Lactonen können auch die entsprechenden, chemisch äquivalenten Polykondensate der den Lactonen entsprechenden Hydroxycarbonsäuren, eingesetzt werden.

Als Makrodiole b) können auch Polyetherdiole oder Alkandiolpolycarbonate oder deren Gemisch mitverwendet werden. Die Alkandiolpolycarbonate haben vorzugsweise 2 bis 10, insbesondere 4 bis 8 C-Atome in der Alkankette. Polyetherdiole sind insbesondere durch Polymerisation von Ethylenoxid, Propylenoxid, Butylenoxid, Tetrahydrofuran, Styroloxid oder Epichlorhydrin mit sich selbst, z.B. in Gegenwart von BF₃ oder durch Anlagerung dieser Verbindungen gegebenenfalls im Gemisch oder nacheinander, an Startkomponenten mit reaktionsfähigen Wasserstoffatomen, wie Alkohole oder Amine, z.B. Wasser, Ethylenglykol, Propan-1,2-diol, Propan-1,3-diol, 2,2-Bis(4-hydroxyphenyl)-propan oder Anilin erhältlich. Polyetherdiole sind z.B. Polypropylenoxid, Polytetrahydrofuran eines Molekulargewichts von 240 bis 5000, und vor allem 500 bis 4500 g/mol. Ein besonders bevorzugtes Polyetherdiol als Aufbaukomponente für die Polyurethane ist Polytetrahydrofuran.

Als Makrodiole b) können auch Polyhydroxyolefine mitverwendet werden, bevorzugt solche mit 2 endständigen Hydroxylgruppen, z.B. α,-ω-Dihydroxypolybutadien, α,-ω-Dihydroxypolymethacrylester oder α,-ω-Dihydroxypolyacrylester. Weitere geeignete Polyole sind Polyacetale, Polysiloxane und Alkydharze.

Das Molverhältnis von amorphen Polyesterdiol (a) zu davon verschiedenem Makrodiol (b) ist vorzugsweise von 1:5 bis 5:1, insbesondere von 1:2 bis 2:1.

Als Diisocyanate c) zu nennen sind insbesondere Diisocyanate X(NCO)₂, wobei X für einen aliphatischen Kohlenwasserstoffrest mit 4 bis 15 Kohlenstoffatomen, einen cycloaliphatischen oder aromatischen Kohlenwasserstoffrest mit 6 bis 15 Kohlenstoffatomen oder einen araliphatischen Kohlenwasserstoffrest mit 7 bis 15 Kohlenstoffatomen steht. Beispiele derartiger Diisocyanate sind Tetramethylendiisocyanat, Hexamethylendiisocyanat, Dodecamethylendiisocyanat, 1,4-Diisocyanatocyclohexan, 1-Isocyanato-3,5,5-trimethyl-5-isocyanatomethylcyclohexan (IPDI), 2,2-Bis-(4-isocyanatocyclohexyl)-propan, Trimethylhexandiisocyanat, 1,4-Diisocyanatoben-zol, 2,4-Diisocyanatotoluol, 2,6-Diisocyanatotoluol, 4,4'-Diisocyanatodiphenylmethan, 2,4'-Di-isocyanato-diphenylmethan, p-Xylylendiisocyanat, Tetramethylxylylendiisocyanat (TMXDI), die Isomeren des Bis-(4-isocyanatocyclohexyl)methans (HMDI) wie das trans/trans-, das cis/cis- und das cis/trans-Isomere sowie aus diesen Verbindungen bestehende Gemische. Derartige Diisocyanate sind im Handel erhältlich. Als Gemische dieser Isocyanate sind besonders die Mischungen der jeweiligen Strukturisomeren von Diisocyanatotoluol und Diisocyanato-diphenylmethan von Bedeutung, insbesondere ist die Mischung aus 80 mol-% 2,4-Diisocy-anatotoluol und 20 mol-% 2,6-Diisocyanatotoluol geeignet. Weiterhin sind die Mischungen von aromatischen Isocyanaten wie 2,4-Diisocyanatotoluol und/oder 2,6-Diisocyanatotoluol mit aliphatischen oder cycloaliphatischen Isocyanaten wie Hexamethylendiisocyanat oder IPDI besonders vorteilhaft, wobei das bevorzugte Mischungsverhältnis der aliphatischen zu aromatischen Isocyanate 4 : 1 bis 1 : 4 beträgt. Zum Aufbau der Polyurethane kann man als Verbindungen außer den vorgenannten auch Isocyanate einsetzen, die neben den freien Isocyanatgruppen weitere verkappte Isocyanatgruppen, z.B. Uretdiongruppen tragen.

Die ein- bis dreiwertigen Alkohole d) enthalten insbesondere anionische Gruppen wie die Sulfonat-, die Carboxylat- und die Phosphatgruppe. Der Begriff ionische Gruppe soll solche Gruppen mit umfassen, die in ionische Gruppen überführt werden können. Entsprechend werden auch die durch Neutralisation in ionische Gruppen überführbaren Carbonsäure-, Sulfonsäure- oder Phosphorsäuregruppen als ionische Gruppen aufgefasst. Als Verbindung d) bevorzugt sind Dihydroxycarbonsäuren und Diaminocarbonsäuren.

In Betracht kommen üblicherweise aliphatische, cycloaliphatische, araliphatische oder aromatische Carbonsäuren und Sulfonsäuren, die mindestens eine alkoholische Hydroxylgruppe tragen. Bevorzugt sind Dihydroxycarbonsäuren, insbesondere Dihydroxyalkylcarbonsäuren, vor allem mit 3 bis 10 C-Atomen, wie sie auch in der US-A 3,412,054 beschrieben sind. Insbesondere sind Verbindungen der allgemeinen Formel (d₁) 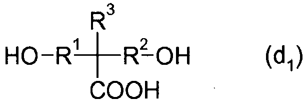 in welcher R¹ und R² für eine C₁- bis C₄-Alkandlyl-(Einheit) und R³ für eine C₁- bis C₄-Alkyl-(Einheit) steht und vor allem Dimethylolpropionsäure (DMPA) bevorzugt.

Neben den bifunktionellen Carbonsäuren können weitere Monomere mit hydrophilen Gruppen verwendet werden, z.B. entsprechende Dihydroxysulfonsäuren und Dihydroxyphosphonsäuren wie 2,3-Dihydroxypropanphosphonsäure oder Diaminosulfonsäuren. Vorzugsweise werden jedoch keine bifunktionellen Sulfonsäuren oder Phosphonsäuren verwendet.

Sofern Monomere mit potentiell ionischen Gruppen eingesetzt werden, kann deren Überführung in die ionische Form vor, während, jedoch vorzugsweise nach der Isocyanat-Polyaddition erfolgen, da sich die ionischen Monomeren in der Reaktionsmischung häufig nur schwer lösen. Besonders bevorzugt liegen die Carboxylatgruppen in Form ihrer Salze mit einem Alkaliion oder einem Ammoniumion als Gegenion vor.

Die Härte und der Elastizitätsmodul der Polyurethane lassen sich erhöhen, wenn als Diole zusätzlich zweiwertige Alkohole e) mit einem Molekulargewicht von etwa 62 bis 500, vorzugsweise von 62 bis 200 g/mol, eingesetzt werden. Als Monomere e) werden vor allem die Aufbaukomponenten der für die Herstellung von Polyesterpolyolen genannten kurzkettigen Alkandiole eingesetzt, wobei die unverzweigten Diole mit 2 bis 12 C-Atomen und einer geradzahligen Anzahl von C-Atomen sowie Pentan-1,5-diol und Neopentylglykol bevorzugt werden. Als Diole e) kommen z.B. Ethylenglykol, Propan-1,2-diol, Propan-1,3-diol, Butan-1,3-diol, Buten-1,4-diol, Butin-1,4-diol, Pentan-1,5-diol, Neopentylglykol, Bis-(hydroxymethyl)-cyclohexane wie 1,4-Bis-(hydroxymethyl)-cyclohexan, 2-Methyl-propan-1,3-diol, Methylpentandiole, ferner Diethylenglykol, Triethylenglykol, Tetraethylenglykol, Polyethylenglykol, Dipropylenglykol, Polypropylenglykol, Dibutylenglykol und Polybutylenglykole in Betracht. Bevorzugt sind Alkohole der allgemeinen Formel HO-(CH₂)ₓ-OH, wobei x eine Zahl von 1 bis 20, bevorzugt eine gerade Zahl von 2 bis 20 ist. Beispiele hierfür sind Ethylenglycol, Butan-1,4-diol, Hexan-1,6-diol, Octan-1,8-diol und Dodecan-1,12-diol. Weiterhin bevorzugt ist Neopentylglykol.

Bevorzugt beträgt in den Polyurethanen der Anteil der Diole a) und b), bezogen auf die Gesamtmenge aller Diole 10 bis 100 mol-% oder 60 bis 100 mol% und der Anteil der Monomere e), bezogen auf die Gesamtmenge der Diole a) und b) und der merhwertigen Alkohole e) 0 bis 90 mol-%, oder 0 bis 40 mol%.

Die Monomere (f), die von den Monomeren (a) bis (e) verschieden sind und welche optional auch Bestandteile des Polyurethans sind, dienen im Allgemeinen der Vernetzung oder der Kettenverlängerung. Es sind im Allgemeinen mehr als zweiwertige nicht-phenolische Alkohole, Amine mit 2 oder mehr primären und/oder sekundären Aminogruppen sowie Verbindungen, die neben einer oder mehreren alkoholischen Hydroxylgruppen eine oder mehrere primäre und/oder sekundäre Aminogruppen tragen. Alkohole mit einer höheren Wertigkeit als 2, die zur Einstellung eines gewissen Verzweigungs- oder Vernetzungsgrades dienen können, sind z.B. Trimethylolpropan, Glycerin oder Zucker. Ferner kommen Monoalkohole in Betracht, die neben der Hydroxylgruppe eine weitere gegenüber Isocyanaten reaktive Gruppe tragen wie Monoalkohole mit einer oder mehreren primären und/oder sekundären Aminogruppen, z.B. Monoethanolamin.

Polyamine mit 2 oder mehr primären und/oder sekundären Aminogruppen werden vor allem dann eingesetzt, wenn die Kettenverlängerung bzw. Vernetzung in Gegenwart von Wasser stattfinden soll, da Amine in der Regel schneller als Alkohole oder Wasser mit Isocyanaten reagieren. Das ist häufig dann erforderlich, wenn wässerige Dispersionen von vernetzten Polyurethanen oder Polyurethanen mit hohem Molgewicht gewünscht werden. In solchen Fällen geht man so vor, dass man Prepolymere mit Isocyanatgruppen herstellt, diese rasch in Wasser dispergiert und anschließend durch Zugabe von Verbindungen mit mehreren gegenüber Isocyanaten reaktiven Aminogruppen kettenverlängert oder vernetzt. Hierzu geeignete Amine sind im allgemeinen polyfunktionelle Amine des Molgewichtsbereiches von 32 bis 500 g/mol, vorzugsweise von 60 bis 300 g/mol, welche mindestens zwei Aminogruppen, ausgewählt aus der Gruppe der primären und sekundären Aminogruppen, enthalten. Beispiele hierfür sind Diamine wie Diaminoethan, Diaminopropane, Diaminobutane, Diaminohexane, Piperazin, 2,5-Dimethylpi-perazin, Amino-3-aminomethyl-3,5,5-trimethyl-cyclohexan (Isophorondiamin, IPDA), 4,4'-Di-aminodicyclohexylmethan, 1,4-Diaminocyclohexan, Aminoethylethanolamin, Hydrazin, Hydrazinhydrat oder Triamine wie Diethylentriamin oder 1,8-Diamino-4-aminomethyloctan.

Die Amine können auch in blockierter Form, z.B. in Form der entsprechenden Ketimine (siehe z.B. CA-A 1 129 128), Ketazine (vgl. z.B. die US-A 4 269 748) oder Aminsalze (s. US-A 4 292 226) eingesetzt werden. Auch Oxazolidine, wie sie beispielsweise in der US-A 4 192 937 verwendet werden, stellen verkappte Polyamine dar, die für die Herstellung der erfindungsgemäßen Polyurethane zur Kettenverlängerung der Prepolymeren eingesetzt werden können. Bei der Verwendung derartiger verkappter Polyamine werden diese im allgemeinen mit den Prepolymeren in Abwesenheit von Wasser vermischt und diese Mischung anschließend mit dem Dispersionswasser oder einem Teil des Dispersionswassers vermischt, so dass hydrolytisch die entsprechenden Polyamine freigesetzt werden.

Bevorzugt werden Gemische von Di- und Triaminen verwendet, besonders bevorzugt Gemische von Isophorondiamin (IPDA) und Diethylentriamin (DETA).

Die Polyurethane enthalten bevorzugt 1 bis 30, besonders bevorzugt 4 bis 25 mol-%, bezogen auf die Gesamtmenge aller isocyanatreaktiven mehrwertigen Verbindungen, als Komponente (f) mindestens ein Polyamin mit mindestens 2 gegenüber Isocyanaten reaktiven Aminogruppen. Für den gleichen Zweck können als Monomere (f) auch höher als zweiwertige Isocyanate eingesetzt werden. Handelsübliche Verbindungen sind beispielsweise das Isocyanurat oder das Biuret des Hexamethylendiisocyanats.

Monomere (g), die optional mitverwendet werden, sind Monoisocyanate, Monoalkohole und monoprimäre und -sekundäre Amine. Im Allgemeinen beträgt ihr Anteil maximal 10 mol-%, bezogen auf die gesamte Molmenge der Monomere. Diese monofunktionellen Verbindungen tragen üblicherweise weitere funktionelle Gruppen wie olefinische Gruppen oder Carbonylgruppen und dienen zur Einführung von funktionellen Gruppen in das Polyurethan, die die Dispergierung bzw. die Vernetzung oder weitere polymeranaloge Umsetzung des Polyurethans ermöglichen. In Betracht kommen hierfür Monomere wie Isopropenyl-a,a-dimethylbenzylisocyanat (TMI) und Ester von Acryl- oder Methacrylsäure wie Hydroxyethylacrylat oder Hydroxyethylmethacrylat.

Klebstoffe mit einem besonders guten Eigenschaftsprofil erhält man vor allem dann, wenn als Diisocyanate (c) im Wesentlichen nur aliphatische Diisocyanate, cycloaliphatische Diisocyanate oder araliphatische Diisocyanate eingesetzt werden. Diese Monomerkombination wird in hervorragender Weise ergänzt als Komponente (d) durch Dihydroxymonocarbonsäure-Alkali-Salze oder Diaminomonocarbonsäure-Alkali-Salze; wobei das Na-Salz am besten geeignet ist.

Auf dem Gebiet der Polyurethanchemie ist allgemein bekannt, wie das Molekulargewicht der Polyurethane durch Wahl der Anteile der miteinander reaktiven Monomere sowie des arithmetischen Mittels der Zahl der reaktiven funktionellen Gruppen pro Molekül eingestellt werden kann. Normalerweise werden die Komponenten (a) bis (g) sowie ihre jeweiligen Molmengen so gewählt, dass der Quotient aus der Summe aller NCO-Gruppen und der Summe aller NCO-reaktiven OH-Gruppen, d.h. das Verhältnis A : B mit
- A: der Molmenge an Isocyanatgruppen und
- B: der Summe aus der Molmenge der Hydroxylgruppen und der Molmenge der funktionellen Gruppen, die mit Isocyanaten in einer Additionsreaktion reagieren können, 0,5 : 1 bis 2 : 1, bevorzugt 0,8 : 1 bis 1,3:1 besonders bevorzugt 0,9 : 1 bis 1,2 : 1 beträgt. Ganz besonders bevorzugt liegt das Verhältnis A : B möglichst nahe an 1 : 1.

Die eingesetzten Monomere (a) bis (g) tragen im Mittel üblicherweise 1,5 bis 2,5, bevorzugt 1,9 bis 2,1, besonders bevorzugt 2,0 Isocyanatgruppen bzw. funktionelle Gruppen, die mit Isocyanaten in einer Additionsreaktion reagieren können.

Säuregruppen des Polyurethans sind zumindest zum Teil mit mindestens einem organischen oder anorganischen Neutralisationsmittlel neutralisiert. Die Säuregruppen sind vorzugsweise zu mindestens 20 Mol-%, besonders bevorzugt zu mindestens 30 Mol-%, ganz besonders bevorzugt zu mindestens 50 Mol-% neutralisiert. Insbesondere sind 20 bis 80 Mol-%, besonders bevorzugt 30 bis 70 Mol-% der Säuregruppen neutralisiert.

Vorzugsweise verwendet man Natronlauge, Kalilauge oder Ammoniak als Neutralisationsmittel, wobei Ammoniak besonders bevorzugt ist.

In einer Ausführungsform ist das Polyurethan im Wesentlichen aufgebaut aus
a) 10 bis 80 Gew.% an mindestens einem amorphen Polyesterdiol mit einem Molekulargewicht über 500 bis 4000 g/mol, welches aufgebaut ist aus einem Gemisch aus mindestens einer aliphatischen Dicarbonsäure mit 3 bis 10, vorzugsweise 4 bis 8 C-Atomen und mindestens einer aromatischen Dicarbonsäure im Verhältnis von 0,5:1 bis 2:1 und mindestens einem Alkandiol mit 2 bis 10, vorzugsweise 4 bis 8 C-Atomen,
b) 10 bis 80 Gew.% an mindestens einem Makrodiol mit einem Molekulargewicht über 500 bis 4000 g/mol, welches ausgewählt ist aus der Gruppe bestehend aus Polyetherdiolen, vorzugsweise Polytetrahydrofuran, und Alkandiolpolycarbonaten mit 2 bis 10, vorzugsweise 4 bis 8 C-Atomen in der Alkankette, und deren Gemisch,
c) 5 bis 30 Gew.% an mindestens einem organischen Diisocyanat oder einem eine arithmetische mittlere NCO-Funktionalität von 1,9 bis 2,3 aufweisenden Gemisch aus organischen Isocyanatverbindungen,
d) 2 bis 10 Gew.% an mindestens einer Dihydroxycarbonsäure,
e) 0 bis 5 Gew.% an mindestens einem zweiwertigen Alkohol eines mittleren Molekulargewichts von 62 bis 500 g/mol und
f) mindestens einem organischen oder anorganischen Neutralisationsmittlel in einer Menge, sodass mindestens 20% von Verbindung d) ionogen, d.h. neutralisiert vorliegen.

Die Polyaddition der Aufbaukomponenten zur Herstellung des Polyurethans erfolgt vorzugsweise bei Reaktionstemperaturen von bis zu 180 °C, bevorzugt bis zu 150 °C unter Normaldruck oder unter autogenem Druck. Die Herstellung von Polyurethanen, bzw. von wässrigen Polyurethandispersionen ist dem Fachmann bekannt. Die Polyurethane liegen vorzugsweise als wässrige Dispersion vor und werden in dieser Form verwendet. Der pH-Wert der Polymerdispersion wird vorzugsweise auf pH größer 5, insbesondere auf einen pH-Wert zwischen 5,5 und 8,5 eingestellt.

Der erfindungsgemäß zu verwendende Klebstoff enthält Carboxylatgruppen und vorzugsweise weitere reaktive Gruppen, die untereinander oder mit externen Vernetzungsmitteln eine Vernetzungsreaktion eingehen können. Diese reaktiven Gruppen liegen vorzugsweise in einer Menge von 0,0001 bis 0,5 Mol, besonders bevorzugt von 0,0005 bis 0,5 Mol/100 g Klebstoff vor. Carboxylgruppen werden auch durch Verseifungsreaktionen gebildet, so dass auch ohne einen anfänglichen Gehalt an Carboxylgruppen im Polyurethan eine Vernetzung eintreten kann.

Der Polyurethandispersionsklebstoff enthält mindestens einen externen Vernetzer. Vernetzungsmittel sind Polyisocyanate mit mindestens zwei Isocyanatgruppen, z.B. aus Diisocyanaten gebildete Isocyanurate, Verbindungen mit mindestens einer Carbodiimidgruppe, chemisch blockierte Isocyanate, verkapselte Isocyanate, verkapselte Uretdione, Biurete oder Allophanate. Besonders bevorzugt sind aliphatische Polyisocyanate, insbesondere wasseremulgierbare Polyisocyanate, z.B. Basonat® LR9056. Der externe Vernetzer wird vorzugsweise in einer Menge von 0,5 bis 10 Gew.%, bezogen auf Feststoffgehalt der Dispersion, eingesetzt. Ein externer Vernetzer ist eine Verbindung, welche vor der Vernetzungsreaktion nicht an das Polyurethan gebunden ist sondern in der Polyurethandispersion gelöst oder dispergiert ist.

Die erfindungsgemäßen Polyurethandispersionen werden erfindungsgemäß in wässrigen Klebstoffzubereitungen für die Herstellung von Laminaten, d.h. in wässrigen Kaschierklebstoffzubereitungen zum Verkleben von großflächigen Substraten, insbesondere für die Herstellung von Verbundfolien verwendet.

Die vorliegende Erfindung betrifft somit auch ein Verfahren zur Herstellung von Verbundfolien, bei dem man eine oben beschriebene wässrige Polyurethandispersion zur Verfügung stellt. Hierbei können die wässrigen Polymerdispersionen als solche oder nach Konfektionierung mit üblichen Hilfsstoffen als wässrige Klebstoffzubereitungen eingesetzt werden. Übliche Hilfsstoffe sind beispielsweise Netzmittel, Verdicker, Schutzkolloide, Lichtschutzstabilisatoren, Biozide, Entschäumer usw. Die optional konfektionierte Polyurethandispersion wird auf eine Kunststoff- oder Metallfolie aufgetragen und mit einer oder mehreren weiteren Kunststoff- und/oder Metallfolien zu einer Verbundfolie verklebt.

Die erfindungsgemäßen Klebstoffzubereitungen benötigen nicht den Zusatz von weichmachenden Harzen (Tackifiern) oder anderen Weichmachern. Bei dem Verfahren zur Herstellung von Verbundfolien werden mindestens zwei Substrate unter Verwendung der wässrigen Polymerdispersion miteinander verklebt. Die Substrate sind großflächige, flexible Komponenten, von denen mindestens eine, vorzugsweise zwei Polymerfolien sind.

Bei dem erfindungsgemäßen Verfahren zur Herstellung von Verbundfolien wird die erfindungsgemäße Polymerdispersion oder eine entsprechend konfektionierte Zubereitung auf die zu verklebenden Substrate vorzugsweise mit einer Schichtdicke von 0,1 bis 20 g/m², besonders bevorzugt 1 bis 7 g/m² z. B. durch Rakeln, Streichen etc. aufgetragen. Es können übliche Beschichtungsverfahren angewendet werden, z.B. Walzenstreichen, Gegenlaufwalzenstreichen, Gravurwalzenstreichen, Gegenlaufgravurwalzenstreichen, Bürstenstreichen, Stabstreichen, Sprühbeschichten, Luftbürstenbeschichtung, Meniskusbeschichtung, Vorhangbeschichtung oder Tauchbeschichtung. Nach kurzer Zeit zur Ablüftung des Dispersionswassers (vorzugsweise nach 1 bis 60 Sekunden) kann das beschichtete Substrat dann mit einem zweiten Substrat kaschiert werden, wobei die Temperatur z.B. 20 bis 200 °C, vorzugsweise 20 bis 100 °C und der Druck z. B. 100 bis 3000 kN/m², vorzugsweise 300 bis 2000 kN/m² betragen kann.

Die erfindungsgemäße Polymerdispersion auch wird als zweikomponentiger Klebstoff verwendet, bei dem eine Vernetzungskomponente, wie z.B. ein wasseremulgierbares Isocyanat, zugesetzt wird. Wenigstens eines der Substrate kann auf der mit dem Klebstoff beschichteten Seite bedruckt oder metallisiert sein.

Als Substrate eignen sich z. B. Polymerfolien, insbesondere aus Polyethylen (PE), orientiertem Polypropylen (OPP), ungerecktes Polypropylen (CPP), Polyamid (PA), Polyethylenterephthalat (PET), Polyacetat, Zellophan, mit Metall, z. B. Aluminium, beschichtete (bedampfte) Polymerfolien (kurz : metallisierte Folien) oder Metallfolien, z.B. aus Aluminium. Die genannten Folien können miteinander oder mit einer Folie eines anderen Typs, z. B. Polymerfolien mit Metallfolien, verschiedene Polymerfolien miteinander etc. verklebt werden. Die genannten Folien können beispielsweise auch mit Druckfarben bedruckt sein.

Eine Ausführungsform der Erfindung ist eine Verbundfolie erhältlich nach dem oben genannten Verfahren, d.h. hergestellt unter Verwendung einer der oben beschriebenen erfindungsgemäßen wässrigen Polyurethandispersionen. Das Material einer ersten Folie ist vorzugsweise ausgewählt aus OPP, CPP, PE, PET und PA und wobei das Material einer zweiten Folie vorzugsweise ausgewählt ist aus OPP, CPP, PE, PET, PA und Metallfolie. In einer Ausführungsform der Erfindung ist die erste Folie und/oder die zweite Folie auf der jeweiligen Seite, welche mit der erfindungsgemäßen Polymerdispersion beschichtet wird, bedruckt oder metallisiert. Die Dicke der Substratfilme kann beispielsweise von 5 bis 100 µm, vorzugsweise von 5 bis 40 µm betragen. Bei bevorzugten Verbundfolien ist das Folienmaterial ausgewählt aus der Gruppe bestehend aus Aluminiumfolie, bedruckte Polyesterfolie, unbedruckte Polyesterfolie, bedruckte Polyamidfolie, unbedruckte Polyamidfolie, Polypropylenfolie, Polyethylenfolie und Kombinationen daraus.

Eine Oberflächenbehandlung der Foliensubstrate ist vor der Beschichtung mit einer erfindungsgemäßen Polymerdispersion nicht unbedingt erforderlich. Bessere Ergebnisse können aber erhalten werden, wenn die Oberfläche der Foliensubstrate vor der Beschichtung modifiziert werden. Hierbei können übliche Oberflächenbehandlungen angewendet werden, z.B. Coronabehandlung zur Verstärkung der Haftwirkung. Die Coronabehandlung oder andere Oberflächenbehandlungen werden in dem Maße durchgeführt, wie für eine ausreichende Benetzbarkeit mit der Beschichtungszusammensetzung erforderlich ist. Üblicherweise ist eine Coronabehandlung von ungefähr 10 Watt pro Quadratmeter und Minute für diesen Zweck ausreichend. Alternativ oder zusätzlich können optional auch noch Primer oder Zwischenschichten zwischen Foliensubstrat und Klebstoffbeschichtung verwendet werden. Außerdem können die Verbundfolien, weitere, zusätzliche funktionale Schichten aufweisen, z.B. Barriereschichten, Druckschichten, Farb- oder Lackschichten oder Schutzschichten. Die funktionalen Schichten können sich dabei außen, d.h. auf der mit Klebstoff beschichteten Seite abgewandten Seite des Foliensubstrats oder innen, zwischen Foliensubstrat und Klebstoffschicht befinden.

Es ist ein Vorteil der Erfindung, dass unterschiedlichste Substrate miteinander verklebt, d.h. kaschiert werden können, wobei die erfindungsgemäßen Polymerdispersionen eine gute Haftung der Klebstoffzubereitung an den Substraten gewährleisten und hoch belastbare Verbundfolien hergestellt werden können, die insbesondere für retort-Anwendungen und für hot-filling Anwendungen eingesetzt werden können.

### Beispiele

### Beispiel B1

In einem Rührkolben mit Rückflusskühler und Thermometer wurden 346,5 g (0,16 mol) eines Polyesterols der OH-Zahl 53,1 aus Adipinsäure/Isophthalsäure und Hexandiol-1,6, 328 g (0,16 mol) eines PolyTHFs der OHZ 56,1 und 51,5 g (0,384 mol) Dimethylolpropionsäure sowie 66 g Aceton vorgelegt. Nach Zugabe von 112,5 g (0,669 mol) Hexamethylendiisocyanat wird bei 115 °C Außentemperatur 95 min lang gerührt. Dann wurde mit 1016 g Aceton verdünnt und auf Raumtemperatur abgekühlt. Der NCO-Gehalt der Lösung wurde zu 0,04% bestimmt. Hierzu wurden 61,3 g einer 8,5%igen wässrigen Ammoniaklösung gegeben. Nach 10 Minuten wurde mit 1232 g Wasser dispergiert. Nach Destillation des Acetons wurde eine wässrige Polyurethandispersion mit einem Festgehalt von 41 % erhalten.

### Beispiel B2

In einem Rührkolben mit Rückflusskühler und Thermometer wurden 126,8 g (0,06 mol) eines Polyesterols der OH-Zahl 53,1 aus Adipinsäure/Isophthalsäure und Hexandiol-1,6, 110,4 g (0,06 mol) eines Polycarbonats der OHZ 61,0 und 19,3 g (0,144 mol) Dimethylolpropionsäure sowie 25 g Aceton vorgelegt. Nach Zugabe von 46 g (0,264 mol) Toluylendiisocyanat wird bei 115 °C Außentemperatur 180 min lang gerührt. Dann wurde mit 381 g Aceton verdünnt und auf Raumtemperatur abgekühlt. Der NCO-Gehalt der Lösung wurde zu 0,254% bestimmt. Hierzu wurden 24 g einer 9%igen wässrigen Ammoniaklösung gegeben. Nach 10 Minuten wurde mit 360 g Wasser dispergiert. Nach Destillation des Acetons wurde eine wässrige Polyurethandispersion mit einem Festgehalt von 41 % erhalten.

### Vergleichsbeispiel V1 (analog Beispiel 1 der EP 0615 988)

Luphen® 3621: Polyetherbasierte Polyurethandispersion auf Basis eines Propylenoxid-Polyethers, Dimethylolpropionsäure und Toluolendiisocyanat mit einem Feststoffgehalt von ca. 50%.

### Vergleichsbeispiel V2

Epotal® Eco: Polyurethandispersion auf Basis eines Polyesterols aus Adipinsäure/ Butandiol-1,4, Toluolendiisocyanat/Hexamethylendiisocyanat und Aminoethylaminopropionsäure mit einem Feststoffgehalt von ca. 40%.

### Herstellung und Testen von Verbundfolien

Auf Folien aus Polyethylenterephtalat (PET) einer Dicke von 36 µm wurden die zu testenden Polyurethandispersionen in einer Menge von 5 g/m² unter Verwendung von 3 Gew.% Basonat® LR9056 (wasseremulgierbarer Isocyanatvernetzer auf Basis aliphatischer Isocyanate) aufgetragen. Die beschichteten Folien wurden mit einer weiteren Folie (Aluminiumfolie) verpresst.

Die Verbundfolien wurden einer retort-Behandlung unterzogen, indem sie in einer gesättigten Wasserdampfatmosphäre 45 Minuten lang bei 120 °C behandelt wurden.

Die Schälfestigkeit von 15 mm breiten Teststreifen des Folienverbundes wurden in N/15 mm mit einer Zugprüfmaschine bei einer Abzugsgeschwindigkeit von 100 mm/min bestimmt. Die Ergebnisse sind in Tabelle 1 zusammengefasst.

**Tabelle 1: Schälwerte**

| Beispiel | Schälwert [N/15 mm] Vor retort-Behandlung | Schälwert [N/15 mm] nach retort-Behandlung |
|---|---|---|
| B1 | 4,9 | 5,0 |
| B2 | 3,2 | 4,7 |
| V1 Luphen® 3621 | 2,2 | 3,9 |
| V2 Epotal® Eco | 1,5 | 0,6 |

Die Ergebnisse in Tabelle 1 zeigen, dass die erfindungsgemäßen Dispersionen B1 und B2 den (kommerziell verfügbaren) Vergleichsbeispielen V1 und V2 in Ihren mechanischen Eigenschaften deutlich überlegen sind. Dies gilt sowohl vor als auch nach der Wärmebehandlung in Wasser (retort-Behandlung).

## Patentansprüche

1. Verwendung von wässrigen Polyurethandispersionen zur Verbundfolienkaschierung, wobei das Polyurethan zu mindestens 10 Gew.-% aufgebaut ist aus mindestens einem amorphen Polyesterpolyol, wobei die Polyurethandispersion mindestens einen externen Vernetzer enthält und es sich bei dem externen Vernetzer um ein Polyisocyanat mit mindestens zwei Isocyanatgruppen handelt.

2. Verwendung nach dem vorhergehenden Anspruch, **dadurch gekennzeichnet, dass** das amorphe Polyesterpolyol im Temperaturbereich von -30°C bis +60°C keinen Schmelzpunkt aufweist.

3. Verwendung nach einem der vorhergehenden Ansprüche, **dadurch gekennzeichnet, dass** das Polyurethan im Wesentlichen aufgebaut ist aus
a) mindestens einem amorphen Polyesterdiol mit einem Molekulargewicht über 500 bis 4000 g/mol,
b) mindestens einem von dem amorphen Polyesterdiol a) verschiedenen, weiteren Makrodiol mit einem Molekulargewicht über 500 bis 4000 g/mol,
c) mindestens einem organischen Diisocyanat oder einem eine arithmetische mittlere NCO-Funktionalität von 1,9 bis 2,3 aufweisenden Gemisch aus organischen Isocyanatverbindungen, vorzugsweise Toluol-2,4-diisocyanat,
d) mindestens einer Verbindung ausgewählt aus der Gruppe bestehend aus ein- bis dreiwertigen Alkoholen, welche zusätzlich mindestens eine ionische Gruppe oder mindestens eine in eine ionische Gruppe überführbare Gruppe enthalten, Diaminocarbonsäuren und Diaminosulfonsäuren,
e) optional mindestens einem zweiwertigen Alkohol eines mittleren Molekulargewichts von 62 bis 500 g/mol und
f) optional weiteren, von den Monomeren (a) bis (e) verschiedenen mehrwertigen Verbindungen mit reaktiven Gruppen, bei denen es sich um alkoholische Hydroxylgruppen, primäre oder sekundäre Aminogruppen oder Isocyanatgruppen handelt und
g) optional von den Monomeren (a) bis (f) verschiedenen, einwertigen Verbindungen mit einer reaktiven Gruppe, bei der es sich um eine alkoholische Hydroxylgruppe, eine primäre oder sekundäre Aminogruppe oder eine Isocyanatgruppe handelt,
h) mindestens einem organischen oder anorganischen Neutralisationsmittlel, vorzugsweise Ammoniak.

4. Verwendung nach einem der vorhergehenden Ansprüche, **dadurch gekennzeichnet, dass** das Polyurethan im Wesentlichen aufgebaut ist aus
a) 10 bis 80 Gew.% an mindestens einem amorphen Polyesterdiol mit einem Molekulargewicht über 500 bis 4000 g/mol,
b) 10 bis 80 Gew.% an mindestens einem von dem amorphen Polyesterdiol a) verschiedenen, weiteren Makrodiol mit einem Molekulargewicht über 500 bis 4000 g/mol,
c) 5 bis 30 Gew.% an mindestens einem organischen Diisocyanat oder einem eine arithmetische mittlere NCO-Funktionalität von 1,9 bis 2,3 aufweisenden Gemisch aus organischen Isocyanatverbindungen,
d) 2 bis 10 Gew.% an mindestens einer Verbindung ausgewählt aus ein- bis dreiwertigen Alkoholen, welche zusätzlich mindestens eine ionische Gruppe oder mindestens eine in eine ionische Gruppe überführbare Gruppe enthält und Diaminocarbonsäuren,
e) 0 bis 5 Gew.% an mindestens einem zweiwertigen Alkohol eines mittleren Molekulargewichts von 62 bis 500 g/mol und
f) 0 bis 5 Gew.% weiteren, von den Monomeren (a) bis (e) verschiedenen mehrwertigen Verbindungen mit reaktiven Gruppen, bei denen es sich um alkoholische Hydroxylgruppen, primäre oder sekundäre Aminogruppen oder Isocyanatgruppen handelt und
g) 0 bis 5 Gew.% von den Monomeren (a) bis (f) verschiedenen, einwertigen Verbindungen mit einer reaktiven Gruppe, bei der es sich um eine alkoholische Hydroxylgruppe, eine primäre oder sekundäre Aminogruppe oder eine Isocyanatgruppe handelt,
h) mindestens einem organischen oder anorganischen Neutralisationsmittlel in einer Menge, sodass mindestens 20% von Verbindungen d) ionogen, d.h. neutralisiert vorliegen.

5. Verwendung nach einem der vorhergehenden Ansprüche, **dadurch gekennzeichnet, dass** das amorphe Polyesterdiol a) aufgebaut ist aus einem Gemisch aus mindestens einer aliphatischen Dicarbonsäure mit 3 bis 10, vorzugsweise 4 bis 8 C-Atomen und mindestens einer aromatischen Dicarbonsäure im Verhältnis von 0,5:1 bis 2:1 und mindestens einem Alkandiol mit 2 bis 10, vorzugsweise 4 bis 8 C-Atomen.

6. Verwendung nach einem der vorhergehenden Ansprüche, **dadurch gekennzeichnet, dass** der amorphe Polyester a) aufgebaut ist aus Adipinsäure/Isophthalsäure im Verhältnis von 0,5:1 bis 2:1 und mindestens einem Alkandiol mit 4 bis 8 C-Atomen.

7. Verwendung nach einem der vorhergehenden Ansprüche, **dadurch gekennzeichnet, dass** das Makrodiol b) ausgewählt ist aus der Gruppe bestehend aus Polyetherdiolen, vorzugsweise Polytetrahydrofuran, und Alkandiolpolycarbonaten mit 2 bis 10, vorzugsweise 4 bis 8 C-Atomen in der Alkankette, und deren Gemisch.

8. Verwendung nach einem der vorhergehenden Ansprüche, **dadurch gekennzeichnet, dass** die Verbindung d) eine Dihydroxycarbonsäure ist, vorzugsweise Dimethylolpropionsäure.

9. Verwendung nach einem der vorhergehenden Ansprüche, **dadurch gekennzeichnet, dass** der Quotient aus der Summe aller NCO-Gruppen und der Summe aller NCO-reaktiven OH-Gruppen zwischen 0,8 und 1,3 liegt.

10. Verwendung nach einem der vorhergehenden Ansprüche, **dadurch gekennzeichnet, dass** das Polyurethan im Wesentlichen aufgebaut ist aus
a) 10 bis 80 Gew.% an mindestens einem amorphen Polyesterdiol mit einem Molekulargewicht über 500 bis 4000 g/mol, welches aufgebaut ist aus einem Gemisch aus mindestens einer aliphatischen Dicarbonsäure mit 3 bis 10, vorzugsweise 4 bis 8 C-Atomen und mindestens einer aromatischen Dicarbonsäure im Verhältnis von 0,5:1 bis 2:1 und mindestens einem Alkandiol mit 2 bis 10, vorzugsweise 4 bis 8 C-Atomen,
b) 10 bis 80 Gew.% an mindestens einem Makrodiol mit einem Molekulargewicht über 500 bis 4000 g/mol, welches ausgewählt ist aus der Gruppe bestehend aus Polyetherdiolen, vorzugsweise Polytetrahydrofuran, und Alkandiolpolycarbonaten mit 2 bis 10, vorzugsweise 4 bis 8 C-Atomen in der Alkankette, und deren Gemisch,
c) 5 bis 30 Gew.% an mindestens einem organischen Diisocyanat oder einem eine arithmetische mittlere NCO-Funktionalität von 1,9 bis 2,3 aufweisenden Gemisch aus organischen Isocyanatverbindungen,
d) 2 bis 10 Gew.% an mindestens einer Dihydroxycarbonsäure,
e) 0 bis 5 Gew.% an mindestens einem zweiwertigen Alkohol eines mittleren Molekulargewichts von 62 bis 500 g/mol und
f) mindestens einem organischen oder anorganischen Neutralisationsmittlel in einer Menge, sodass mindestens 20% von Verbindung d) ionogen, d.h. neutralisiert vorliegen.

11. Verwendung nach einem der vorhergehenden Ansprüche, **dadurch gekennzeichnet, dass** als Diole zur Herstellung des Polyurethans insgesamt 10 bis 100 mol-%, bezogen auf die Gesamtmenge an Diolen, Diole a) und b) mit einem Molekulargewicht von über 500 bis 5000 g/mol und 0 bis 90 mol-%, bezogen auf die Gesamtmenge der Diole, Diole e) mit einem Molekulargewicht von 62 bis 500 g/mol eingesetzt werden.

12. Verwendung nach einem der vorhergehenden Ansprüche, **dadurch gekennzeichnet, dass** die Polyurethandispersion mindestens ein aliphatisches Polyisocyanat als externen Vernetzer enthält.

13. Verfahren zur Herstellung von Verbundfolien, **dadurch gekennzeichnet, dass** man eine wässrige Polyurethandispersion gemäß einem der vorhergehenden Ansprüche zur Verfügung stellt, die Polyurethandispersion auf eine Kunststoff- oder Metallfolie aufträgt und mit einer oder mehreren weiteren Kunststoff- und/oder Metallfolien zu einer Verbundfolie verklebt.

14. Verbundfolien, erhältlich nach dem Verfahren gemäß dem vorhergehenden Anspruch.

15. Verbundfolien nach dem vorhergehenden Anspruch, **dadurch gekennzeichnet, dass** das Folienmaterial ausgewählt ist aus der Gruppe bestehend aus Aluminiumfolie, bedruckte Polyesterfolie, unbedruckte Polyesterfolie, bedruckte Polyamidfolie, unbedruckte Polyamidfolie, Polypropylenfolie, Polyethylenfolie und Kombinationen daraus.

## Claims

1. The use of aqueous polyurethane dispersions for composite foil lamination, where at least 10% by weight of the polyurethane derives from at least one amorphous polyester polyol, where the polyurethane dispersion comprises at least one external crosslinking agent and the external crosslinking agent is a polyisocyanate having at least two isocyanate groups.

2. The use according to the preceding claim, wherein the amorphous polyester polyol does not have a melting point in the temperature range from -30°C to +60°C.

3. The use according to any of the preceding claims, wherein the polyurethane derives essentially from
a) at least one amorphous polyesterdiol with a molar mass above 500 to 4000 g/mol,
b) at least one further macrodiol differing from the amorphous polyesterdiol a) and with a molar mass above 500 to 4000 g/mol,
c) at least one organic diisocyanate or one mixture having an arithmetic average NCO functionality of 1.9 to 2.3, of organic isocyanate compounds, preferably toluene 2,4-diisocyanate,
d) at least one compound selected from the group consisting of mono- to trihydric alcohols which also comprise at least one ionic group or at least one group convertible into an ionic group, diaminocarboxylic acids, and diaminosulfonic acids,
e) optionally at least one dihydric alcohol having an average molar mass of 62 to 500 g/mol, and
f) optionally further polyfunctional compounds differing from the monomers (a) to (e) and having reactive groups, where these involve alcoholic hydroxy groups, primary or secondary amino groups, or isocyanate groups, and
g) optionally monofunctional compounds differing from the monomers (a) to (f) and having a reactive group, where this involves an alcoholic hydroxy group, a primary or secondary amino group, or an isocyanate group,
h) at least one organic or inorganic neutralizing agent, preferably ammonia.

4. The use according to any of the preceding claims, wherein the polyurethane derives essentially from
a) 10 to 80% by weight of at least one amorphous polyesterdiol with a molar mass above 500 to 4000 g/mol,
b) 10 to 80% by weight of at least one further macrodiol differing from the amorphous polyesterdiol a) and with a molar mass above 500 to 4000 g/mol,
c) 5 to 30% by weight of at least one organic diisocyanate or one mixture having an arithmetic average NCO functionality of 1.9 to 2.3, of organic isocyanate compounds,
d) 2 to 10% by weight of at least one compound selected from mono- to trihydric alcohols, where this compound also comprises at least one ionic group or at least one group convertible into an ionic group, and diaminocarboxylic acids,
e) 0 to 5% by weight of at least one dihydric alcohol having an average molar mass of 62 to 500 g/mol, and
f) 0 to 5% by weight of further polyfunctional compounds differing from the monomers (a) to (e) and having reactive groups, where these involve alcoholic hydroxy groups, primary or secondary amino groups, or isocyanate groups, and
g) 0 to 5% by weight of monofunctional compounds differing from the monomers (a) to (f) and having a reactive group, where this involves an alcoholic hydroxy group, a primary or secondary amino group, or an isocyanate group,
h) an amount of at least one organic or inorganic neutralizing agent such that at least 20% of compounds d) are present in ionogenic, i.e. neutralized, form.

5. The use according to any of the preceding claims, wherein the amorphous polyester diol a) derives from a mixture of at least one aliphatic dicarboxylic acid having 3 to 10, preferably 4 to 8, carbon atoms and at least one aromatic dicarboxylic acid in a ratio of 0.5:1 to 2:1, and from at least one alkanediol having 2 to 10, preferably 4 to 8, carbon atoms.

6. The use according to any of the preceding claims, wherein the amorphous polyester a) derives from adipic acid/isophthalic acid in a ratio of 0.5:1 to 2:1 and from at least one alkanediol having 4 to 8 carbon atoms.

7. The use according to any of the preceding claims, wherein the macrodiol b) is one selected from the group consisting of polyetherdiols, preferably polytetrahydrofuran, and alkanediol polycarbonates having from 2 to 10, preferably from 4 to 8, carbon atoms in the alkane chain, and mixtures thereof.

8. The use according to any of the preceding claims, wherein compound d) is a dihydroxycarboxylic acid, preferably dimethylolpropionic acid.

9. The use according to any of the preceding claims, wherein the quotient calculated from the entirety of all of the NCO groups and the entirety of all of the NCO-reactive OH groups is between 0.8 and 1.3.

10. The use according to any of the preceding claims, wherein the polyurethane derives essentially from
a) 10 to 80% by weight of at least one amorphous polyesterdiol with a molar mass above 500 to 4000 g/mol which derives from a mixture of at least one aliphatic dicarboxylic acid having from 3 to 10, preferably from 4 to 8, carbon atoms and at least one aromatic dicarboxylic acid in a ratio of 0.5:1 to 2:1 and from at least one alkanediol having from 2 to 10, preferably from 4 to 8, carbon atoms,
b) 10 to 80% by weight of at least one macrodiol with a molar mass above 500 to 4000 g/mol, selected from the group consisting of polyetherdiols, preferably polytetrahydrofuran, and alkanediol polycarbonates having from 2 to 10, preferably from 4 to 8, carbon atoms in the alkane chain, and mixtures thereof,
c) 5 to 30% by weight of at least one organic diisocyanate or one mixture having an arithmetic average NCO functionality of 1.9 to 2.3, of organic isocyanate compounds,
d) 2 to 10% by weight of at least one dihydroxycarboxylic acid,
e) 0 to 5% by weight of at least one dihydric alcohol having an average molar mass of 62 to 500 g/mol, and
f) an amount of at least one organic or inorganic neutralizing agent such that at least 20% of compound d) are present in ionogenic, i.e. neutralized, form.

11. The use according to any of the preceding claims, wherein diols used for producing the polyurethane comprise in total 10 to 100 mol%, based on the total amount of diols, of diols a) and b) with a molar mass above 500 to 5000 g/mol, and 0 to 90 mol%, based on the total amount of the diols, of diols (e) with a molar mass of 62 to 500 g/mol.

12. The use according to any of the preceding claims, wherein the polyurethane dispersion comprises at least one aliphatic polyisocyanate as external crosslinking agent.

13. A process for producing composite foils, which comprises providing an aqueous polyurethane dispersion according to any of the preceding claims, applying the polyurethane dispersion to a plastics foil or metal foil, and adhesive bonding to one or more further plastics foils and/or metal foils to give a composite foil.

14. A composite foil obtainable by the process according to the preceding claim.

15. Composite foil according to the preceding claim, wherein the foil material is one selected from the group consisting of aluminum foil, printed polyester foil, unprinted polyester foil, printed polyamide foil, unprinted polyamide foil, polypropylene foil, polyethylene foil, and combinations thereof.

## Revendications

1. Utilisation de dispersions aqueuses de polyuréthane pour le contrecollage de films composites, le polyuréthane étant constitué à raison d'au moins 10 % en poids d'au moins un polyesterpolyol amorphe, la dispersion de polyuréthane contenant au moins un agent de réticulation externe et l'agent de réticulation externe consistant en un polyisocyanate comportant au moins deux groupes isocyanate.

2. Utilisation selon la revendication précédente, **caractérisée en ce que** le polyesterpolyol amorphe ne présente pas de point de fusion dans la plage de température de -30 °C à +60 °C.

3. Utilisation selon l'une quelconque des revendications précédentes, **caractérisée en ce que** le polyuréthane est essentiellement constitué de
a) au moins un polyesterdiol amorphe ayant une masse moléculaire de plus de 500 à 4 000 g/mole,
b) au moins un autre macrodiol ayant une masse moléculaire de plus de 500 à 4 000 g/mole, différent du polyesterdiol amorphe a),
c) au moins un diisocyanate organique ou un mélange de composés isocyanate organiques, présentant une fonctionnalité NCO moyenne arithmétique de 1,9 à 2,3, le toluène-2,4-diisocyanate de préférence,
d) au moins un composé choisi dans le groupe constitué par des alcools mono- à trihydriques qui contiennent en autre au moins un groupe ionique ou au moins un groupe pouvant être converti en un groupe ionique, des acides diaminocarboxyliques et des acides diaminosulfoniques,
e) en option au moins un alcool dihydrique ayant une masse moléculaire moyenne de 62 à 500 g/mole et
f) en option d'autres composés plurivalents différents des monomères (a) à (e), comportant des groupes réactifs qui consistent en des groupes hydroxy alcooliques, des groupes amino primaires ou secondaires ou des groupes isocyanate et
g) en option des composés monovalents différents des monomères (a) à (f), comportant un groupe réactif qui consiste en un groupe hydroxy alcoolique, un groupe amino primaire ou secondaire ou un groupe isocyanate,
h) au moins un agent de neutralisation organique ou inorganique, l'ammoniac de préférence.

4. Utilisation selon l'une quelconque des revendications précédentes, **caractérisée en ce que** le polyuréthane est essentiellement constitué de
a) 10 à 80 % en poids d'au moins un polyesterdiol amorphe ayant une masse moléculaire de plus de 500 à 4 000 g/mole,
b) 10 à 80 % en poids d'au moins un autre macrodiol ayant une masse moléculaire de plus de 500 à 4 000 g/mole, différent du polyesterdiol amorphe a),
c) 5 à 30 % en poids d'au moins un diisocyanate organique ou d'un mélange de composés isocyanate organiques, présentant une fonctionnalité NCO moyenne arithmétique de 1,9 à 2,3,
d) 2 à 10 % en poids d'au moins un composé choisi parmi des alcools mono- à trihydriques qui contiennent en autre au moins un groupe ionique ou au moins un groupe pouvant être converti en un groupe ionique, et des acides diaminocarboxyliques,
e) 0 à 5 % en poids d'au moins un alcool dihydrique ayant une masse moléculaire moyenne de 62 à 500 g/mole et
f) 0 à 5 % en poids d'autres composés plurivalents différents des monomères (a) à (e), comportant des groupes réactifs qui consistent en des groupes hydroxy alcooliques, des groupes amino primaires ou secondaires ou des groupes isocyanate et
g) 0 à 5 % en poids de composés monovalents différents des monomères (a) à (f), comportant un groupe réactif qui consiste en un groupe hydroxy alcoolique, un groupe amino primaire ou secondaire ou un groupe isocyanate,
h) au moins un agent de neutralisation organique ou inorganique, en une quantité telle qu'au moins 20 % des composés d) se trouvent sous forme ionogène, c'est-à-dire neutralisés.

5. Utilisation selon l'une quelconque des revendications précédentes, **caractérisée en ce que** le polyesterdiol amorphe (a) est formé à partir d'un mélange d'au moins un acide dicarboxylique ayant de 3 à 10, de préférence de 4 à 8 atomes de carbone et d'au moins un acide dicarboxylique aromatique en un rapport de 0,5:1 à 2:1 et d'au moins un alcanediol ayant de 2 à 10, de préférence de 4 à 8 atomes de carbone.

6. Utilisation selon l'une quelconque des revendications précédentes, **caractérisée en ce que** le polyester amorphe a) est formé à partir d'acide adipique/acide téréphtalique en un rapport de 0,5:1 à 2:1 et d'au moins un alcanediol ayant de 4 à 8 atomes de carbone.

7. Utilisation selon l'une quelconque des revendications précédentes, **caractérisée en ce que** le macrodiol b) est choisi dans le groupe constitué par des polyétherdiols, le polytétrahydrofurane de préférence, et des alcanediolpolycarbonates ayant de 2 à 10, de préférence de 4 à 8 atomes de carbone dans la chaîne alcane, et un mélange de ceux-ci.

8. Utilisation selon l'une quelconque des revendications précédentes, **caractérisée en ce que** le composé d) est un acide dihydroxycarboxylique, l'acide diméthylolpropionique de préférence.

9. Utilisation selon l'une quelconque des revendications précédentes, **caractérisée en ce que** le quotient de la somme de tous les groupes NCO et de la somme de tous les groupes OH réactifs avec NCO est compris entre 0,8 et 1,3.

10. Utilisation selon l'une quelconque des revendications précédentes, **caractérisée en ce que** le polyuréthane est essentiellement constitué de
a) 10 à 80 % en poids d'au moins un polyesterdiol amorphe ayant une masse moléculaire de plus de 500 à 4 000 g/mole, qui est formé à partir d'un mélange d'un mélange d'au moins un acide dicarboxylique ayant de 3 à 10, de préférence de 4 à 8 atomes de carbone et d'au moins un acide dicarboxylique aromatique en un rapport de 0,5:1 à 2:1 et d'au moins un alcanediol ayant de 2 à 10, de préférence de 4 à 8 atomes de carbone,
b) 10 à 80 % en poids d'au moins un autre macrodiol ayant une masse moléculaire de plus de 500 à 4 000 g/mole, qui est choisi dans le groupe constitué par des polyétherdiols, le polytétrahydrofurane de préférence, et des alcanediolpolycarbonates ayant de 2 à 10, de préférence de 4 à 8 atomes de carbone dans la chaîne alcane, et un mélange de ceux-ci,
c) 5 à 30 % en poids d'au moins un diisocyanate organique ou d'un mélange de composés isocyanate organiques, présentant une fonctionnalité NCO moyenne arithmétique de 1,9 à 2,3,
d) 2 à 10 % en poids d'au moins un acide dihydroxycarboxylique,
e) 0 à 5 % en poids d'au moins un alcool dihydrique ayant une masse moléculaire moyenne de 62 à 500 g/mole et
f) au moins un agent de neutralisation organique ou inorganique, en une quantité telle qu'au moins 20 % du composé d) se trouvent sous forme ionogène, c'est-à-dire neutralisés.

11. Utilisation selon l'une quelconque des revendications précédentes, **caractérisée en ce qu'**on utilise comme diols dans la préparation du polyuréthane au total 10 à 100 % en moles, par rapport à la quantité totale de diols, de diols a) et b) ayant une masse moléculaire de plus de 500 à 5 000 g/mole, et 0 à 90 % en moles, par rapport à la quantité totale des diols, de diols e) ayant une masse moléculaire de 62 à 500 g/mole.

12. Utilisation selon l'une quelconque des revendications précédentes, **caractérisée en ce que** la dispersion de polyuréthane contient en tant qu'agent de réticulation externe au moins un polyisocyanate aliphatique.

13. Procédé pour la fabrication de films composites, **caractérisé en ce qu'**on fournit une dispersion aqueuse de polyuréthane selon l'une quelconque des revendications précédentes, on applique la dispersion de polyuréthane sur un film de matière plastique ou une feuille de métal et on le/la colle avec un(e) ou plusieurs autres films de matière plastique ou feuilles de métal pour obtenir un film composite.

14. Films composites, pouvant être obtenus conformément au procédé selon la revendication précédente.

15. Films composites selon la revendication précédente, **caractérisés en ce que** le matériau des films est choisi dans le groupe constitué par une feuille d'aluminium, un film de polyester imprimé, un film de polyester non imprimé, un film de polyamide imprimé, un film de polyamide non imprimé, un film de polypropylène, un film de polyéthylène et des combinaisons de ceux-ci.
